# EUROPÄISCHE PATENTSCHRIFT

(11) **EP 0 443 135 B1**
(45) Veröffentlichungstag und Bekanntmachung des Hinweises auf die Patenterteilung: **07.06.1995**
(21) Anmeldenummer: 90123926.9
(22) Anmeldetag: 12.12.1990
(51) Int. Cl.: C03B 23/207, C03B 37/012

(54) **Vorrichtung zur Herstellung einer Lichtwellenleiter-Vorform**
Apparatus for fabricating an optical waveguide preform
Dispositif pour fabriquer une préforme pour guide optique

(30) Priorität: 23.02.1990 DE 4005730
(43) Veröffentlichungstag der Anmeldung: 28.08.1991
(73) Patentinhaber: ALCATEL N.V., 2288 BH Rijswijk (NL)
(72) Erfinder: Wittmann, Manfred, Dr. rer. nat., W-7000 Stuttgart 31 (DE); Günther, Robert, Dipl.-Ing., D-7807 Elzach (DE)
(74) Vertreter: Mende, Eberhard, Dipl.-Ing.

(56) Entgegenhaltungen:
- EP-A- 0 196 671
- DE-A- 3 315 156
- DE-A- 3 506 660
- PATENT ABSTRACTS OF JAPAN vol. 11, no. 259 (C-441)(2706) 21 August 1987,& JP-A-62 59545 (FURUKAWA ELECTRIC CO LTD) 16 März 1987,

## Beschreibung

Die Anmeldung betrifft eine Vorrichtung zur Herstellung einer Lichtwellenleiter-Vorform aus einem Rohvorform-Stab aus Kieselglas und wenigstens einem auf diesen aufgeschmolzenes Kieselglasrohr, bestehend aus einer Glasdrehbank, in welcher im Reitstock je ein Backenfutter für die drehbare Lagerung des Rohvorform-Stabes und des Kieselglasrohres in waagerechter Richtung vorgesehen ist.

Eine solche Vorrichtung ist bekannt (DE-A-33 15 156). Bei der bekannten Vorrichtung werden der Rohvorform-Stab und das über diesem befindliche beidseitig gelagerte Kieselglasrohr am gleichen Ende in je ein Backenfutter im Reitstock der Glasdrehbank eingespannt. Das Aufschmelzen des Kieselglasrohres auf den einseitig gelagerten Rohvorform-Stab erfolgt dadurch, daß ein Gasbrenner vom nicht eingespannten Ende des Rohvorform-Stabes an der Stab-Rohr-Einheit entlanggeführt wird, während die Einheit rotiert.

Beim Einsatz der bekannten Vorrichtung hat sich nun herausgestellt, daß der Rohvorform-Stab beim Aufschmelzen des Rohres aus der gemeinsamen Symmetrieachse von Stab und Rohr auswandert. Das führt aber dazu, daß der aus einer solchen Lichtwellenleiter-Vorform gezogene Lichtwellenleiter eine unzulässig große Kernexzentrizität aufweist. Bei der Kernexzentrizität von Lichtwellenleitern werden nur sehr geringe Toleranzen zugelassen, weil diese an Spleißstellen oder in Lichtwellenleiter-Steckern eine hohe Dämpfung verursachen. Außerdem ist es bei der bekannten Vorrichtung nicht möglich, die Herstellung der Lichtwellenleiter-Vorform durch Erzeugung eines Vakuums zwischen Rohvorform-Stab und Kieselglasrohr zu beschleunigen.

Bekannt ist auch bereits ein Verfahren zur Herstellung von Lichtwellenleitern, bei dem in ein Glasrohr ein Glasstab eingeschoben und anschließend das Glasrohr auf den Glasstab aufgeschmolzen wird. Da hierbei das freie Ende des Glasstabes im aufzuschmelzenden Rohr festgelegt wird, d. h. in einem Rohr, dessen Material in die Schmelzphase überführt wird, ist es nicht möglich, die heute üblichen geringen Toleranzen bei der Kernexzentrizität von Lichtwellenleitern einzuhalten. Ein Verfahren zur Herstellung von Glasvorformen für optische Fasern nach der Stab-in-Rohr-Methode mit den erwähnten hohen Behandlungstemperaturen ist ebenfalls bekannt (EP-A-0 196 671), dabei wird während des Verfahrensablaufes im Spalt zwischen dem Stab und dem umgebenden Rohr ein Gasgemisch hindurchgeführt.

Das der Erfindung zugrundeliegende technische Problem besteht nun darin, die aus der DE-A-3 315 156 bekannte Vorrichtung in der Weise zu ändern, daß der Rohvorform-Stab beim Aufschmelzen des Kieselglasrohres nicht mehr aus der gemeinsamen Symmetrieachse auswandert und die Herstellung der Lichtwellenleiter-Vorform beschleunigt werden kann.

Dieses technische Problem ist erfindungsgemäß durch eine Vorrichtung gemäß dem einzigen Patentanspruch gelöst.

Die erfindungsgemäße Ausgestaltung der Glasdrehbank erlaubt die beidseitig feste Lagerung des Rohrvorform-Stabes und des Kieselglasrohres, so daß ein Auswandern aus der gemeinsamen Symmetrieachse von Rohvorform-Stab und Kieselglasrohr nicht mehr möglich ist. Der aus einer mit dieser Vorrichtung hergestellten Lichtwellenleiter-Vorform gezogene Lichtwellenleiter weist eine sehr geringe Kernexzentrizität auf.

Eine vorteilhafte Ausgestaltung der Vorrichtung ist in den Ansprüchen 2 und 3 angegeben.

Die Erfindung ist nachstehend anhand der Figuren 1 bis 3 erläutert. Es zeigen:
- Fig. 1: in schematischer Darstellung die erfindungsgemäße Vorrichtung,
- Fig. 2: eine andere Ausführungsform der Vorrichtung gemäß Fig. 1 und
- Fig. 3: eine Momentaufnahme bei der Herstellung einer Lichtwellenleiter-Vorform mit der Vorrichtung gemäß Fig. 1.

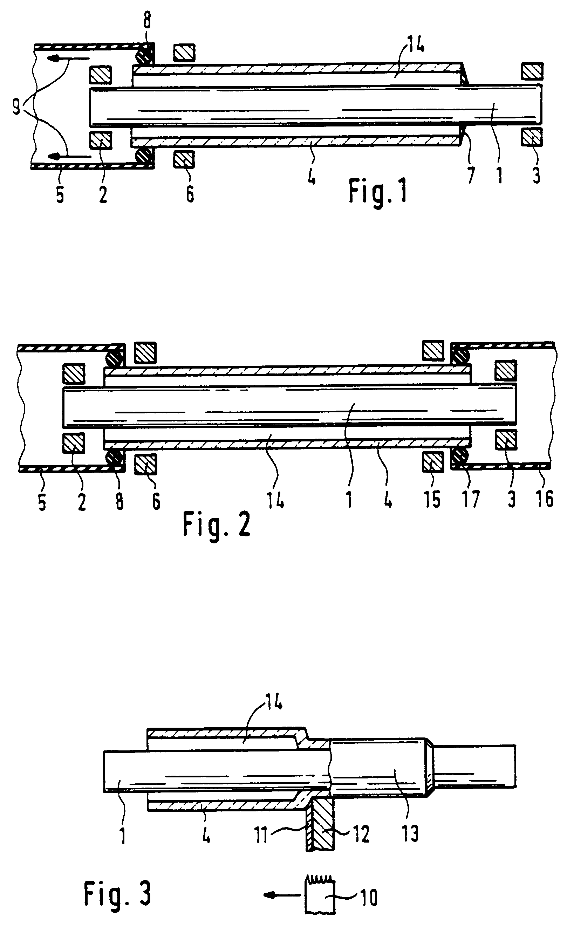

In Fig. 1 sind von der Glasdrehbank das Backenfutter 2 im Spindelstock und das Backenfutter 3 im Reitstock zu erkennen, in denen die Enden der Rohvorform 1 eingespannt sind. Das über die Rohvorform 1 geschobene Kieselglasrohr 4 ist an seinem einen Ende in dem Backenfutter 6 eingespannt. Dieses Ende des Kieselglasrohres 4 ragt in die Rotationsdichtung 5 hinein, zwischen deren Innenumfang und der Oberfläche des Kieselglasrohres 4 eine elastische Dichtung 8 angeordnet ist. Das rechte Ende des Ringspaltes 14 zwischen der Rohvorform 1 und dem Kieselglasrohr 4 ist durch die Dichtung 7 verschlossen Das linke, innerhalb der Rotationsdichtung 5 liegende Ende dieses Ringspaltes ist offen. Der Innenraum der Rotationsdichtung 5 ist an eine Vakuumpumpe angeschlossen, welche den Innenraum und den Ringspalt 14 während des Aufschmelzens des Kieselglasrohres 4 evakuiert, wie durch die Pfeile 9 angedeutet ist.

Das Ausführungsbeispiel der Vorrichtung gemäß Fig. 2 unterscheidet sich von dem Ausführungsbeispiel gemäß Fig. 1 dadurch, daß auch das rechte Ende des Kieselglasrohres 4 in einem Backenfutter 15 drehbar gelagert ist. Außerdem endet das rechte Ende des Kieselglasrohres 4 ebenfalls in einer Rotationsdichtung 16, zwischen deren Innenumfang und der Oberfläche des Kieselglasrohres 4 die elastische Dichtung 17 angeordnet ist. Der Innenraum der Rotationsdichtung 16 kann ebenfalls an die Vakuumpumpe angeschlossen sein, so daß der Ringspalt 14 von links und/oder rechts evakuiert und/oder gespült werden kann.

In Fig. 3 ist der Verfahrensablauf beim Aufschmelzen des Kieselglasrohres 4 dargestellt.

Zu diesem Zweck wird an der gemeinsam mit dem Kieselglasrohr 4 rotierenden Rohvorform 1 ein Gasbrenner 10 von rechts nach links entlang geführt. Durch den Gasbrenner werden zwei Zonen erzeugt, nämlich die Kollabierungszone 11 und die Verglasungszone 12. Nachdem die Verglasung stattgefunden hat, ist aus der Rohvorform 1 mit dem Kieselglasrohr 4 die Lichtwellenleitervorform 13 entstanden.

## Patentansprüche

1. Vorrichtung zur Herstellung einer Lichtwellenleiter-Vorform (13) aus einem Rohvorform-Stab (1) aus Kieselglas und wenigstens einem auf diesen aufgeschmolzenes Kieselglasrohr (4), bestehend aus einer Glasdrehbank, in welcher im Spindelstock je ein Backenfutter (2, 6) für die drehbare Lagerung des Rohvorform-Stabes und des Kieselglasrohres in waagerechter Richtung vorgesehen ist, wobei im Reitstock ein weiteres Backenfutter (2) für das andere Ende der Rohvorform (1) vorgesehen ist, das Backenfutter (2) für die drehbare Lagerung des Rohvorform-Stabes (1) im Spindelstock von einer Rotationsdichtung (5) solcher Ausdehnung umgeben ist, daß sie das Ende des Kieselglasrohres (4) überdeckt, zwischen der Oberfläche des Kieselglasrohres (4) und der Innenfläche der Rotationsdichtung (5) eine elastische Dichtung (8) vorhanden ist und der Innenraum der Rotationsdichtung an eine Vakuumpumpe angeschlossen ist, und entweder die Spalte zwischen Kieselglasrohr und Rohvorform-Stab am vom Spindelstock abgekehrten Ende des Kieselglasrohres durch eine das Kieselglasrohr fest lagernde Dichtung (7) verschlossen ist, oder das Kieselglasrohr (4) im Reitstock ebenfalls in einem Backenfutter (15) drehbar gelagert ist und das Backenfutter (3) für die drehbare Lagerung des Vorform-Stabes (1) im Reitstock ebenfalls von einer Rotationsdichtung (16) solcher Ausdehnung umgeben ist, daß sie das Ende des Kieselglasrohres (4) überdeckt, zwischen der Oberfläche des Kieselglasrohres (4) und der Innenfläche der Rotationsdichtung (16) eine elastische Dichtung (17) vorhanden und der Innenraum der Rotationsdichtung (16) an eine Vakuumpumpe angeschlossen ist.

## Claims

1. Apparatus for producing a light-waveguide preform (13) from a raw preform rod (1) of quartz glass and at least one quartz-glass tube (4) melted onto the raw preform rod (1), consisting of a glass-working lathe in which one jaw chuck (2, 6) each is provided in the headstock for the rotatable mounting of the raw preform rod and the quartz-glass tube in a horizontal direction, in which arrangement a further jaw chuck (3) is provided in the tailstock for the other end of the raw preform (1), the jaw chuck (2) for the rotatable mounting of the raw preform rod (1) in the headstock is surrounded by a rotary seal (5) of such extension that it covers the end of the quartz-glass tube (4), there is an elastic seal (8) between the surface of the quartz-glass tube (4) and the inner surface of the rotary seal (5), and the inner space of the rotary seal is connected to a vacuum pump, and either the gap between quartz-glass tube and raw preform rod at the quartz-glass-tube end remote from the headstock is closed by a seal (7) firmly mounting the quartz-glass tube, or the quartz-glass tube (4) in the tailstock is likewise rotatably mounted in a jaw chuck (15), and the jaw chuck (3) for the rotatable mounting of the preform rod (1) in the tailstock is likewise surrounded by a rotary seal (16) of such extension that it covers the end of the quartz-glass tube (4), there is an elastic seal (17) between the surface of the quartz-glass tube (4) and the inner surface of the rotary seal (16), and the inner space of the rotary seal (16) is connected to a vacuum pump.

## Revendications

1. Dispositif pour fabriquer une préforme (13) pour guide d'ondes optique à partir d'un barreau servant de préforme brute (1) en quarz fondu et d'au moins un tube en quarz fondu (4), fondu sur le précédent, dispositif consistant en un tour à verte, dans lequel on prévoit dans la poupée un mandrin à mors (2,6) pour tenir en position de tournage en position horizontale le barreau constituant la préforme brute et le tube de quarz fondu, un second mandrin à mors (2) étant prévu dans la contre-poupée pour l'autre extrémité de la préforme brute (1), le mandrin à mors (2), qui sert à maintenir en position de tournage le barreau (1) constituant la préforme brute dans la poupée, étant entouré par un joint d'étanchéité tournant (5) d'une extension telle qu'il recouvre l'extrémité du tube en quarz fondu (4), un joint d'étanchéité élastique (8) existant entre la surface du tube en quarz fondu (4) et la surface intérieure du joint d'étanchéité tournant (5) et l'espace intérieur du joint d'étanchéité tournant étant raccordé à une pompe à vide, et soit la fente située entre le tube en quarz fondu et le barreau qui constitue la préforme brute étant fermée par un joint d'étanchéité (7) maintenant de façon fixe le tube en quarz fondu, soit le tube en quarz fondu (4) étant monté, de façon à pouvoir tourner, dans la contre-poupée également dans un mandrin à mors (15) et le mandrin à mors (3), qui sert à maintenir dans la contre-poupée le barreau (1) qui constitue la préforme, de façon qu'il puisse tourner, étant entouré également par un joint d'étanchéité tournant (16) d'une extension telle qu'il recouvre l'extrémité du tube en quarz fondu (4), un joint d'étanchéité élastique (17) existant entre la surface du tube en quarz fondu (4) et la surface intérieure du joint d'étanchéité tournant (16) et l'espace intérieur du joint d'étanchéité tournant (16) étant raccordé à une pompe à vide.
